# EUROPÄISCHE PATENTSCHRIFT

(11) **EP 2 002 208 B1**
(45) Veröffentlichungstag und Bekanntmachung des Hinweises auf die Patenterteilung: **06.09.2017**
(21) Anmeldenummer: 07704446.9
(22) Anmeldetag: 08.02.2007
(51) Int. Cl.: G01C 3/08, G01S 7/481, G01S 17/08, G01S 17/32

(54) **VORRICHTUNG ZUR OPTISCHEN DISTANZMESSUNG SOWIE VERFAHREN ZUM BETRIEB EINER SOLCHEN VORRICHTUNG**
DEVICE FOR OPTICALLY MEASURING DISTANCE AND METHOD FOR OPERATING SAID TYPE OF DEVICE
DISPOSITIF DE MESURE OPTIQUE DE DISTANCES ET SON PROCÉDÉ DE FONCTIONNEMENT

(30) Priorität: 23.03.2006 DE 102006013290
(43) Veröffentlichungstag der Anmeldung: 17.12.2008
(73) Patentinhaber: Robert Bosch GmbH, 70442 Stuttgart (DE)
(72) Erfinder: SKULTETY-BETZ, Uwe, 70771 Leinfelden-Echterdingen (DE); HAASE, Bjoern, 70182 Stuttgart (DE); STIERLE, Joerg, 71111 Waldenbuch (DE); WOLF, Peter, 70771 Leinfelden-Echterdingen (DE); RENZ, Kai, 70771 Leinfelden-Echterdingen (DE); SCHULTE, Clemens, 70197 Stuttgart (DE)
(86) Internationale Anmeldenummer: PCT/EP2007/051193
(87) Internationale Veröffentlichungsnummer: WO 2007/107408

(56) Entgegenhaltungen:
- EP-A2- 0 837 301
- DE-A1- 10 051 302
- DE-A1- 10 130 763
- US-B1- 6 301 003

## Beschreibung

### Stand der Technik

### Offenbarung der Erfindung

Die Erfindung geht aus von einer Vorrichtung zur optischen Distanzmessung nach dem Oberbegriff des unabhängigen Anspruchs.

Optische Entfernungsmessgeräte als solche sind seit längerer Zeit bekannt und werden inzwischen auch kommerziell in hoher Stückzahl vertrieben. Diese Geräte senden einen modulierten Lichtstrahl aus, der auf die Oberfläche eines gewünschten Zielobjektes, dessen Abstand zum Gerät zu ermitteln ist, ausgerichtet wird. Das von dem angepeilten Zielobjekt reflektierte oder gestreute, rücklaufende Licht wird vom Gerät teilweise wieder detektiert und zur Ermittlung des gesuchten Abstandes verwendet.

Der Anwendungsbereich derartiger Entfernungsmessgeräte umfasst im Allgemeinen Entfernungen im Bereich von einigen wenigen Zentimetern bis zu mehreren hundert Metern.

In Abhängigkeit von den zu messenden Laufstrecken und der Rückstrahlfähigkeit des Zielobjektes ergeben sich unterschiedliche Anforderungen an die Lichtquelle, die Qualität des Mess-Strahls sowie an den Detektor.

Die aus dem Stand der Technik bekannten optischen Entfernungsmessgeräte lassen sich grundsätzlich entsprechend der Anordnung der im Gerät notwendigerweise vorhandenen Sende- bzw. Empfangskanäle in zwei Kategorien einteilen.

Zum einen gibt es Vorrichtungen, bei denen der Sendekanal in einem gewissen Abstand zu dem Empfangskanal angeordnet ist, sodass die jeweiligen optischen Achsen parallel zueinander, aber beabstandet voneinander verlaufen. Zum anderen gibt es monoaxiale Messvorrichtungen, bei denen der Empfangskanal koaxial zum Sendekanal verläuft.

Die erstgenannten biaxialen Mess-Systeme haben den Vorteil, dass es einer aufwendigen Strahlungsteilung zur Selektion des rücklaufenden Mess-Signals nicht bedarf, sodass beispielsweise auch ein optisches Übersprechen aus dem Sendekanal direkt in den Empfangskanal besser unterdrückt werden kann.

Andererseits besteht bei biaxialen Entfernungsmessgeräten unter anderem der Nachteil, dass es im Bereich kurzer Messentfernungen aufgrund einer Parallaxe zu Detektionsproblemen kommen kann. Dabei wandert die Abbildung des Zielobjektes auf der Detektoroberfläche des Gerätes, die für große Zielentfernungen noch eindeutig auf dem Detektor liegt, mit kürzer werdender Messentfernung zunehmend von der optischen Achse des Empfangsastes weg und erfährt zudem eine deutliche Änderung des Strahlquerschnittes in der Detektorebene.

Dies bedingt, dass ohne weitere Maßnahmen am Gerät, im Nahbereich der Detektion, d. h. für einen kleinen Abstand zwischen Zielobjekt und Messgerät, das detektierte Mess-Signal gegen Null gehen kann.

Derartige Messgeräte können zwar für einen bestimmten Entfernungsbereich optimiert werden, dies bedeutet jedoch dann eine deutliche Einschränkung des dem Messgeräts eigentlich zugänglichen Messbereichs.

Aus der DE 10 130 763 A1 ist eine Vorrichtung zur optischen Distanzmessung über einen großen Messbereich bekannt, die eine Sendeinheit mit einer Lichtquelle zur Aussendung modulierter, optischer Strahlung auf ein Zielobjekt hin aufweist, wobei die in diesem Messgerät angeordnete Empfangseinheit mit einem optischen Detektor zum Empfang der vom Zielobjekt rücklaufenden optischen Strahlung auf einer zur optischen Achse der Sendeeinheit beabstandeten Empfangsachse liegt. Die aktive, lichtempfindliche Fläche des Detektors der Empfangseinheit der DE 10 130 763 A1 verjüngt sich in Richtung einer Strahlverschiebung für kleiner werdende Zielobjektabstände, die sich aufgrund einer Parallaxe der rücklaufenden Mess-Strahlung ergibt. Eine prinzipiell vergleichbare Vorrichtung ist EP 0 837 301 A2 zu entnehmen. Ferner ist aus der US6,301,003B1 eine Vorrichtung zur optischen Entfernungsmessung bekannt, die eine Mehrzahl getrennt voneinander aktivierbarer lichtempfindlicher Flächen aufweist.

Aus der DE 10 051 302 A1 ist ein Laserentfernungsmessgerät für den Nah- und Fernbereich mit einem speziellen Empfänger bekannt, der einen Sende- und einen Empfangskanal aufweist, wobei der Sendekanal aus einem Sendeobjektiv, in dessen Brennpunkt eine Laserlichtquelle angeordnet ist, besteht, und der Empfangskanal aus einem Empfangsobjektiv besteht, in dessen Brennebene sich eine Empfängeranordnung befindet. Die optischen Achsen des Sendeobjektives und des Empfangsobjektives verlaufen parallel zueinander mit einem endlichen Abstand. Die Empfängeranordnung des Laserentfernungsmessgerätes der DE 100 51 302 A1 ist eine Fotodioden-Chipanordnung mit mindestens zwei aktiven Fotodiodenflächen, die auf einer Geraden angeordnet sind, die die optischen Achsen des Sende- und des Empfangobjektives dieser Vorrichtung schneidet.

Aufgabe der vorliegenden Erfindung ist es, ausgehend vom Stand der Technik bei einer Vorrichtung zur optischen Distanzmessung zu gewährleisten, dass über einen möglichst großen Messbereich, ein möglichst konstantes Empfangssignal gemessen werden kann.

Diese Aufgabe wird gelöst mit einer erfindungsgemäßen Vorrichtung zur optischen Distanzmessung mit den Merkmalen des unabhängigen Anspruchs.

### Vorteile der Erfindung

Die erfindungsgemäße Vorrichtung zur optischen Distanzmessung weist eine Sendeeinheit mit einer Lichtquelle zur Aussendung optischer Strahlung, insbesondere modulierter optischer Messstrahlung, und eine zur optischen Achse dieser Sendeeinheit beabstandete Empfangseinheit mit zumindest einem optischen Detektor auf. Der Detektor der Empfangseinheit weist in vorteilhafter Weise eine Mehrzahl von voneinander getrennten, insbesondere voneinander elektrisch getrennten, lichtempfindlichen Flächen auf, die im Betrieb der Vorrichtung getrennt voneinander aktivierbar sind.

Erfindungsgemäß erweitert sich die Einhüllende in Richtung der Strahlverschiebung für kleiner werdende Zielobjektabstände, die sich aufgrund einer Parallaxe der rücklaufenden Strahlung ergibt. Dies kann dann insbesondere den Effekt des vergrößerten Messstrahldurchmessers für kleiner werdende Objektabstände kompensieren.

Die Einhüllende ist dabei eine hypothetische Kurve, die sich mit minimalem Abstand um den Rand der Lichtempfindlichen Flächen des Detektors legen lässt. Auf diese Weise kann sichergestellt werden, dass für jeden Objektabstand hinreichend Mess-Signal auf die jeweils gerade aktive Teilfläche des Detektors fällt. Insbesondere ist die Form der gesamten optischen Detektionsfläche so gewählt, dass auch im Nahbereich Signal ausreichender Amplitude auf der Detektoroberfläche vorliegt. Dies führt zu einer weiteren Verbesserung des Verhältnisses von Nutzlicht zu Fremdlicht, sodass auch aus diesem Grunde die Messgenauigkeit der Vorrichtung im unmittelbaren Nahbereich erhöht und damit der dem Gerät zugängliche Messbereich erweitert wird.

Durch das Anlegen einer Spannung kann die lichtempfindliche Fläche eines optischen Detektors, die typischerweise aus zumindest einem Halbleitermaterial besteht, aktiviert werden. Das heißt, auf die lichtempfindliche Fläche des Detektors auftreffendes Licht wird typischerweise in ein elektrisches Signal verwandelt und kann so über eine nachgeordnete elektronische Schaltung detektiert werden.

Dazu besitzt die erfindungsgemäße Vorrichtung Schaltmittel, die es ermöglichen, einzelne oder mehrere Teilflächen der lichtempfindlichen Fläche des Detektors an- bzw. Abzuschalten.

Durch das Abschalten von nicht, oder lediglich teilweise genutzten Fotodiodenflächen kann das Rauschen, welches aufgrund von auf den Detektor auftreffendem Fremdlicht prinzipiell erzeugt wird, deutlich verringert werden, da nur diejenigen lichtempfindlichen Flächen benutzt werden, auf die das für die Messung wesentliche Nutzlicht auftrifft. Insbesondere kann dabei in vorteilhafter weise lediglich auch nur eine einzelne lichtempfindliche Fläche aktiviert werden.

Des Weiteren verringert sich aufgrund der kleineren im Betrieb aktiven Fotodiodenfläche auch die elektrische Kapazität der Fotodiode und somit des Detektionssystems. Daher kann die Fotodiode mit einer höheren Frequenz betrieben werden, was wiederum zu einer höheren Messgenauigkeit der erfindungsgemäßen Vorrichtung zur optischen Distanzmessung führt.

Damit ist eine Erweiterung des für dieses Messgerät zugänglichen Messbereichs auf einfache und zuverlässige Weise möglich.

Vorteilhafte Ausführungsformen und Weiterentwicklungen der erfindungsgemäßen Vorrichtung ergeben sich aus den in den Unteransprüchen aufgeführten Merkmalen.

In vorteilhafter Weise sind jeweils nur diejenige lichtempfindliche Fläche oder diejenigen lichtempfindlichen Flächen der Mehrzahl von lichtempfindlichen Flächen des Detektors aktiv, auf die der größte Anteil der rücklaufenden optischen Mess-Strahlung auftrifft. Dies ermöglicht, dass ein ausreichend starkes Mess-Signal detektiert werden kann, wobei gleichzeitig der Anteil von Fremdlicht, der auf die ungenutzten Bereiche der lichtempfindlichen Fläche des Detektors auftrifft, deutlich reduziert werden kann. Dies ermöglicht ein besseres Signal zu Rauschverhältnis im detektierten Mess-Signal, sodass sowohl die Auflösung des Messgerätes als auch der dem Messgerät zugänglichen Entfernungsbereich deutlich verbessert werden kann.

Die erfindungsgemäße Vorrichtung weist Mittel auf, die es ermöglichen einzelne lichtempfindliche Flächen des Detektors an- bzw. abzuschalten. Die Aktivierung der jeweiligen lichtempfindlichen Fläche kann beispielsweise dadurch erfolgen, dass für jede Fläche - bei einer gemeinsamen Masse - ein Anschluss nach außen, d. h. beispielsweise aus dem Diodengehäuse geführt wird. Somit kann durch Kontaktierung des entsprechenden Anschlusses beeinflusst werden, welche Fläche aktiviert und somit verwendet werden soll. Alternativerweise ist es möglich, bei mehreren Flächen einen Multiplexer direkt in die Fotodiode zu integrieren.

In einer nicht erfindungsgemäßen Ausführungsform verjüngt sich die Einhüllende der lichtempfindlichen Flächen des Detektors in Richtung einer Strahlverschiebung für kleiner werdende Zielobjektabstände, die sich aufgrund einer Parallaxe der rücklaufenden Strahlung ergibt.

Die Einhüllende der lichtempfindlichen Flächen des Detektors weist in vorteilhafter Weise eine Symmetrieachse auf, die in der gemeinsamen Ebene der optischen Achsen von Sendeeinheit und Empfangseinheit der Vorrichtung liegt. Dadurch, dass der vom Zielobjekt rücklaufende Mess-Strahl für einen kleiner werdenden Objektabstand lateral in der gemeinsamen Ebene der optischen Achsen von Sendeeinheit und Empfangseinheit auswandert, wird der Detektor in vorteilhafter Weise eine in dieser Richtung elongierte Form haben. Auf diese Weise wird der Abhängigkeit der Richtung des rücklaufenden Mess-Signals von der Entfernung des Messgeräts von einem Zielobjekt Rechung getragen. Vorteilhafterweise wird die Größe der lichtempfindlichen Flächen des Detektors der Empfangseinheit dabei so gewählt, dass noch genügend Signal, beispielsweise auch im Nahbereich, auf die jeweilige aktive Teilfläche des Detektors fällt.

Dies ermöglicht darüber hinaus in vorteilhafter Weise auch der Abhängigkeit der Stärke des rücklaufenden Mess-Signals von der Entfernung des Messgeräts zum Zielobjekt Rechnung zu tragen.

Aufgrund des zugrunde liegenden Abstands-Quadratgesetzes für die Änderung der Intensität mit der zurückgelegten Laufstrecke ist das rücklaufende Mess-Signal für den Nahbereich deutlich größer als für Zielobjekte, die sich weit entfernt von der Messvorrichtung befinden.

Die Ausdehnung der Einhüllenden aller lichtempfindlichen Flächen des Detektors senkrecht zur gemeinsamen Ebene der optischen Achsen von Sende- und Empfangseinheit kann daher in dem Maße abnehmen, wie das Lichtsignal aufgrund der kürzeren Laufstrecke im Nahbereich zunimmt. Dies hat zudem den Vorteil, dass aufgrund der reduzierten Ausdehnung des Detektors zwar noch genügend Licht aus dem Nahbereich auf den Detektor fällt, dass aber der Detektor aufgrund seiner in dieser Richtung kleiner werdenden aktiven lichtempfindlichen Flächen nicht durch das Licht aus dem Nahbereich übersteuert werden kann.

Dieser Effekt wird nur begrenzt durch den gegenläufigen Effekt, dass aufgrund der schlechteren Fokussierung des rücklaufenden Messstrahlenbündels bei kürzeren Objektabständen, der Durchmesser des Messstrahlenbündels stark zunimmt, und daher die auf eine kleine Detektorfläche auftretende Leistungsdichte des rücklaufenden Messsignals gegebenenfalls zu gering werden könnte. In einem solchen Fall ist ein Detektor vorteilhaft, bei dem sich die Einhüllende der lichtempfindlichen Teilflächen des Detektors in Richtung der Strahlverschiebung für kürzer werdende Objektabstände nicht verjüngt, sondern gerade erweitert.

Bei der Größe der Fläche des Detektors bzw. der Größe der einzelnen empfindlichen Teilflächen des Detektors sollte nur sichergestellt sein, dass die wirksame Fläche, d. h. eine aktive Fläche in dem Bereich des Detektors, indem Licht von weit entfernten Zielobjekten auf die Detektoroberfläche auftrifft, groß genug ist, um in diesem Fall möglichst das gesamte Signal zu detektieren, da weit entfernte Messobjekte zu einem relativ schwachen Detektionssignal führen. Dies ist ebenfalls eine Konsequenz aus dem Abstandsquadratgesetz, dem die detektierte Intensität unterliegt.

Die laterale Ausdehnung der aktiven Flächen des Detektors sollte entsprechend so groß sein, dass noch genügend Licht aus dem unmittelbaren Nahbereich der Detektion auf die jeweils aktive Detektionsfläche gelangt. Aufgrund des hohen Signalpegels, welcher sich wegen der kurzen Wegstrecken im Nahbereich ergibt, ist es in diesem Fall nicht notwendig, die volle Signalstärke zu detektieren.

Ein weiterer Vorteil der beanspruchten Vorrichtung ist der, dass die elektrisch-kapazitiven Eigenschaften des Detektors des Messgerätes aufgrund der erfindungsgemäßen Form der aktiven Detektionsflächen positiv beeinflusst werden. Eine zu große aktive Detektoroberfläche würde die elektrische Kapazität des Detektors erhöhen, sodass die zeitliche Ansprechcharakteristik, bzw. äquivalent dazu der Frequenzgang des Mess-Systems nicht mehr den benötigten Erfordernissen der Zeit- bzw. Frequenzauflösung des Mess-Systems entsprechen würde.

In vorteilhafter Weise lässt sich die erfindungsgemäße Vorrichtung zur optischen Distanzmessung durch die Verwendung eines Lasers, insbesondere einer Laserdiode als Lichtquelle realisieren. Laser und im speziellen Laserdioden sind über den gesamten sichtbaren Spektralbereich der elektromagnetischen Wellen mittlerweile kostengünstig erhältlich. Im Besonderen eignen sich Laserdioden wegen ihrer kompakten Größe und auch verhältnismäßig hohen Ausgangsleistungen für die Verwendung in Vorrichtungen zur optischen Distanzmessung, insbesondere in derartigen, hand gehaltenen Vorrichtungen.

Die erfindungsgemäße Vorrichtung zur optischen Distanzmessung ermöglicht somit ein möglichst konstantes Empfangs- bzw. Detektionssignal über einen großen Messbereich von Entfernungen zwischen der Vorrichtung und einem Zielobjekt.

Weitere Vorteile der erfindungsgemäßen Vorrichtung sind der nachfolgenden Zeichnung sowie der zughörigen Beschreibung eines Ausführungsbeispiels der erfindungsgemäßen Vorrichtung angegeben.

### Zeichnung

In der Zeichnung sind Ausführungsbeispiele der erfindungsgemäßen Vorrichtung dargestellt.

Es zeigen:
- Figur 1: eine schematisierte Ansicht auf ein Ausführungsbeispiel einer erfindungsgemäßen Vorrichtung zur optischen Distanzmessung,
- Figur 2: eine schematische Darstellung der Variation des Mess-Strahlenbündels in der Detektionsebene bei Variation des Messobjektabstandes,
- Figur 3: eine Aufsicht auf die Detektoroberfläche einer erfindungsgemäßen Vorrichtung,
- Figur 4: eine Aufsicht auf eine nicht erfindungsgemäße Ausführungsform eines Detektors in schematischer Darstellung,
- Figur 5: eine weitere Ausführungsform für den Detektor einer erfindungsgemäßen Vorrichtung, in schematischer Darstellung,
- Figur 6: eine weitere Ausführungsform für den Detektor einer erfindungsgemäßen Vorrichtung, in schematischer Darstellung,
- Figur 7: eine weitere Ausführungsform für den Detektor einer erfindungsgemäßen Vorrichtung, in schematischer Darstellung,
- Figur 8: eine weitere Ausführungsform für den Detektor einer erfindungsgemäßen Vorrichtung, in schematischer Darstellung,

### Beschreibung der Ausführungsbeispiele

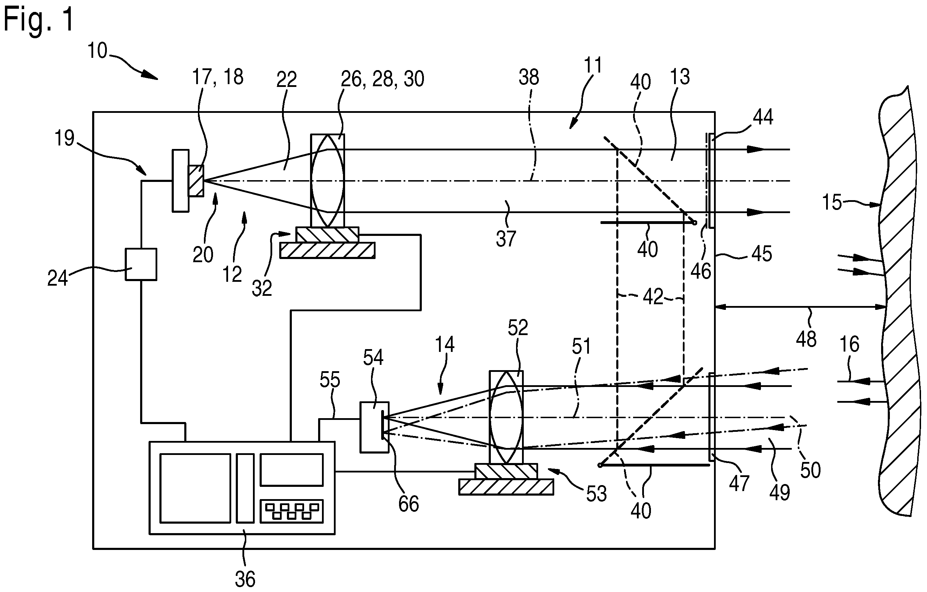

In Figur 1 ist in schematisierter Weise eine erfindungsgemäße Vorrichtung zur optischen Distanzmessung mit den wichtigsten Komponenten zur Beschreibung ihrer Funktion dargestellt. Das erfindungsgemäße Gerät 10 weist ein Gehäuse 11 auf, in dem eine Sendeeinrichtung 12 zur Erzeugung eines Mess-Signals 13 sowie eine Empfangseinrichtung 14 zur Detektion des von einem Zielobjekt 15 rücklaufenden Mess-Signals 16 angeordnet sind.

Die Sendeeinrichtung 12 beinhaltet eine Lichtquelle 17, die im Ausführungsbeispiel der Figur 1 durch eine Halbleiter-Laserdiode 18 realisiert ist. Die Verwendung anderer Lichtquellen in der erfindungsgemäßen Vorrichtung ist aber ebenso möglich. Die Laserdiode 18 sendet einen Laserstrahl 20 in Form eines für das menschliche Auge sichtbaren Lichtbündels 22 aus.

Die Laserdiode 18 wird dazu über ein Steuergerät 24 betrieben, das durch eine entsprechende Elektronik eine Modulation des elektrischen Eingangssignals 19 der Diode 18 erzeugt. Durch eine derartige Modulation des Diodenstroms lässt sich erreichen, dass das optische Mess-Signal 13, welches zur Entfernungsmessung genutzt wird, ebenfalls in gewünschter Weise moduliert wird.

Das Laserstrahlbündel 20 durchläuft anschließend eine Kollimationsoptik 26 in Form eines Objektivs 28, das in der Figur 1 in vereinfachter Weise in Form einer einzelnen Linse 30 dargestellt ist. Das Objektiv 28 befindet sich in diesem Ausführungsbeispiel optional auf einer Verstellmimik 32, die prinzipiell eine Änderung der Position des Objektivs in allen drei Raumrichtungen, beispielsweise zu Justagezwecken ermöglicht.

Alternativ kann die Kollimationsoptik 26 jedoch auch bereits Bestandteil der Laserdiode 18 sein bzw. fest mit dieser verbunden sein.

Nach Durchlaufen des Objektivs 28 ergibt ein beispielsweise amplitudenmoduliertes Signal 13 in Form eines parallelen Lichtbündels 37, das sich entlang der optischen Achse 38 der Sendeeinheit 12 ausbreitet, wie es in Figur 1 schematisch dargestellt ist. Im Sendeast 12 der erfindungsgemäßen Vorrichtung befindet sich zudem noch eine vorzugsweise schaltbare Strahlumlenkung 40, die es gestattet, das Mess-Signal 13 unter Umgehung eines Zielobjekts direkt, d. h. geräteintern auf die Empfangseinheit 14 des Gerätes 10 umzulenken. Auf diese Weise wird eine geräteinterne Referenzstrecke 42 erzeugt, die eine Kalibrierung bzw. einen Abgleich des Mess-Systems gestattet.

Wird mit der erfindungsgemäßen Vorrichtung eine Distanzmessung durchgeführt, verlässt der Mess-Strahl 13 das Gehäuse 11 der erfindungsgemäßen Vorrichtung durch ein optisches Fenster 44 in der Stirnwand 45 des Gerätes 10. Die Öffnung des optischen Fensters kann beispielsweise durch einen Shutter 46 gesichert sein. Zur eigentlichen Messung wird das Messgerät 10 sodann auf ein Zielobjekt 15 ausgerichtet, dessen Entfernung 48 zum Messgerät ermittelt werden soll. Das an dem gewünschten Zielobjekt 15 reflektierte oder auch gestreute Signal 16 bildet ein rücklaufendes Strahlenbündel 49 bzw. 50, das zu einem gewissen Teil wieder in das Messgerät 10 zurückgelangt.

Durch ein Eintrittsfenster 47 an der Stirnseite 45 des Geräts 10 wird die rücklaufende Mess-Strahlung 16 in das Messgerät eingekoppelt und im Ausführungsbeispiel der Figur 1 auf eine Empfangsoptik 52 gelenkt.

In Figur 1 sind exemplarisch zur Verdeutlichung zwei rücklaufende Mess-Strahlenbündel 49 bzw. 50 für zwei unterschiedliche Zielobjektabstände 48 eingezeichnet. Für große Objektabstände und groß heißt in diesem Fall groß gegenüber der Brennweite der Empfangsoptik 52, fällt das vom Zielobjekt rücklaufende Signal 16 parallel zur optischen Achse 51 der Empfangseinrichtung 14 ein. Dieser Fall ist im Ausführungsbeispiel der Figur 1 durch das Mess-Strahlenbündel 49 repräsentiert. Mit kleiner werdendem Objektabstand wird das in das Messgerät einfallende rücklaufende Signal 16 aufgrund einer Parallaxe immer mehr gegenüber der Achse 51 der Empfangseinheit 14 geneigt. Als Beispiel für ein solches rücklaufendes Mess-Strahlenbündel im Nahbereich der Entfernungsmessvorrichtung ist in Figur 1 das Strahlenbündel 50 eingezeichnet.

Die Empfangsoptik 52, die im Ausführungsbeispiel der Figur 1 ebenfalls nur schematisch, durch eine einzelne Linse symbolisiert ist, kollimiert das rücklaufende Mess-Signal 16 und fokussiert dessen Strahlenbündel auf die lichtempfindliche Oberfläche 66 eines Empfangsdetektors 54. Der Detektor 54 weist zur Detektion der optischen Messstrahlung zumindest eine Photodiode, beispielsweise eine PIN-Diode oder eine APD (Avalanche Photo Diode) oder aber auch zumindest einen CCD-Chip als lichtempfindliches Element 66 auf. Darüber hinaus sind natürlich auch andere, dem Fachmann bekannte Flächendetektoren als Empfangsdetektor möglich. Der Flächendetektor ist in der Regel mit seinen aktiven lichtempfindlichen Oberflächen 66 senkrecht auf die optische Achse des Empfangsastes ausgerichtet. Das einfallende optische Signal wird durch den Empfangsdetektor 54 in ein elektrisches Signal 55 umgewandelt und der weiteren Auswertung in einer Auswerteeinheit 36 der erfindungsgemäßen Vorrichtung zugeführt.

Die Empfangsoptik 52, die im Ausführungsbeispiel der Figur 1 nicht einschränkend ebenfalls auf einer Verstellmimik 53 angebracht ist, befindet sich ungefähr im Abstand ihrer Brennweite von der aktiven Oberfläche 66 des Detektors entfernt, sodass einfallende Strahlung, welche von einem Zielobjekt kommt, welches weit entfernt vom Messgerät liegt, genau auf den Detektor bzw. auf die aktiven lichtempfindlichen Flächen fokussiert wird. Bei kleinen Abständen zum Zielobjekt ist jedoch zu beobachten, dass die Abbildungsposition für den am Zielobjekt reflektierten oder gestreuten Messfleck sich zunehmend vom Fokus der Empfangslinse entfernt. So wandert der rücklaufende Mess-Strahl mit kleiner werdendem Abstand des Zielobjektes zum Messgerät immer weiter von der optischen Achse der Empfangseinrichtung weg und weicht somit auch immer mehr von der optischen Achse der Sendeeinrichtung ab. Zudem wird das rücklaufende Mess-Strahlen-Bündel aufgrund der geänderten Abbildungsverhältnisse am Empfangsobjektiv nicht mehr genau auf die Detektoroberfläche fokussiert. Mit kürzer werdendem Zielobjektabstand ergibt sich ein immer größer werdender Messfleck auf der Detektoroberfläche.

Auf weitere, im Messgerät vorhandene Komponenten, die aber für das Verständnis der erfindungsgemäßen Vorrichtung nicht unbedingt notwendig sind, soll in diesem Zusammenhang nicht weiter eingegangen werden. Es sei nur angemerkt, dass das Messgerät natürlich auch über einen Steuer- und Auswerteeinheit 36 verfügt.

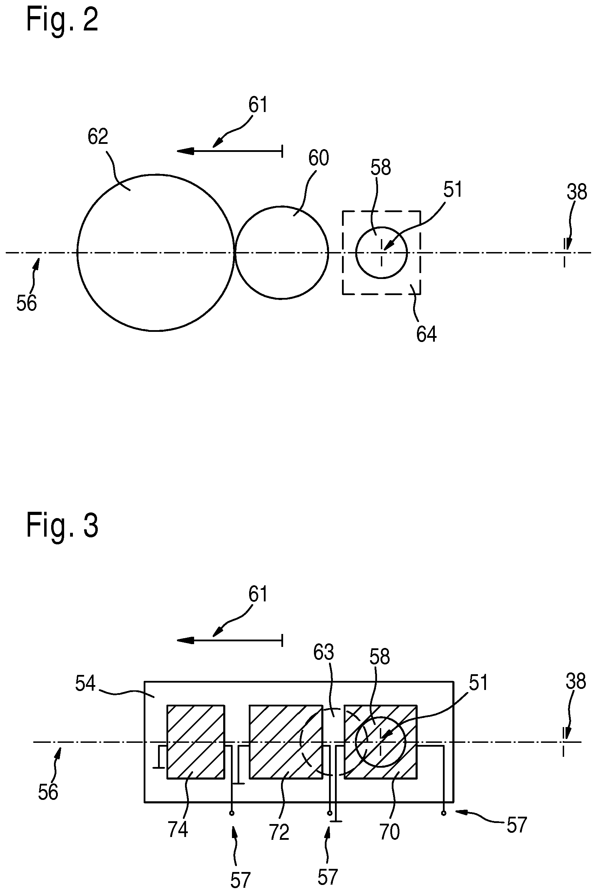

Die Zusammenhänge zwischen dem Abstand des Zielobjektes vom Messgerät und der Position bzw. der Größe des Messflecks auf der Detektoroberfläche ist in schematischer Weise in Figur 2 zur Übersicht dargestellt. Figur 2 zeigt dabei eine Aufsicht auf eine Detektoroberfläche 64 nach dem Stand der Technik in Blickrichtung des vom Messobjekt rücklaufenden Mess-Signals 16. Mit dem Bezugszeichen 56 versehen ist die gemeinsame Ebene der optischen Achse 38 der Sendeeinheit 12 mit der optischen Achse 51 der Empfangseinheit 14. Der Messfleck 58 der rücklaufenden Strahlung 16 für sehr große Objektabstände 48 liegt auf der optischen Achse 51 der Empfangseinheit 14 und wird auf der Oberfläche 64 des Detektors zu einem kleinen Fleck fokussiert. Da der Detektor 54 in etwa in Abstand der Brennweite der Empfangsoptik 52 steht, wird Licht, das optisch gesehen aus dem Unendlichen kommt, aufgrund der optischen Abbildungsgesetze direkt auf die Detektoroberfläche fokussiert. In Figur 2 ist zu Verdeutlichung der Zusammenhänge eine "klassische" Detektorfläche 64 eines Detektors nach dem Stand der Technik gestrichelt eingezeichnet.

Mit abnehmender Distanz 48 des Messgerätes 10 von einem Zielobjekt 15 fällt das rücklaufende Signal 16 zunehmend schräger auf das Empfangsobjektiv 52 ein, sodass auch der Messfleck auf der Detektoroberfläche in Richtung des Pfeils 61 in Figur 2 wandert.

Der in Figur 2 ebenfalls eingezeichnete Messfleck 60 für einen kleinen Objektabstand 48 des Zielobjektes 15 vom Messgerät 10 ist somit von der optischen Achse 51 der Empfangseinrichtung weg gewandert und in seiner Ausdehnung, insbesondere lateralen Ausdehnung deutlich vergrößert.

Bei sehr kleinem Messabstand 48 des Messobjektes 15 zum Messgerät ergibt sich in der Detektorebene ein Messfleck 62 des rücklaufenden Mess-Signals 16, der nochmals deutlich vergrößert ist und zudem auch weiter entfernt von der optischen Achse 51 der Empfangseinheit 14 zu liegen kommt. Eine solche Verschiebung des zu detektierenden Messflecks mit dem relativen Abstand 48 eines Messobjektes 15 zum Messgerät 10 kann ggf. dazu führen, dass für sehr kleine Objektabstände, das rücklaufende Signal 16 nicht mehr auf die aktive Fläche des Messempfängers 54 fällt, wie dies durch die angedeutete, gestrichelt eingezeichnete Fläche 64 eines "klassischen" Messempfängers in Figur 2 angedeutet sein soll.

Um die Variation in der Größe und Lage des Messflecks in der Detektionsebene der Empfangseinheit 14 Rechnung zu tragen, ist die aktive, lichtempfindliche Oberfläche 66 des erfindungsgemäßen Detektors 54 entsprechend gestaltet und soll nachfolgend beschrieben werden.

Figur 3 zeigt ein erstes Ausführungsbeispiel der lichtempfindlichen Oberfläche 66 eines Detektors einer erfindungsgemäßen Vorrichtung. Der Detektor 54 der Empfangseinheit 14 weist in diesem Fall eine Mehrzahl von lichtempfindlichen Flächen 70, 72 und 74 auf, die voneinander getrennt sind und in ihrer Gesamtheit die lichtempfindliche Oberfläche 66 des Detektors bilden. Insbesondere sind die lichtempfindlichen Flächen des Detektors elektrisch voneinander getrennt, sodass es möglich ist, jeweils nur eine der lichtempfindlichen Flächen 70-74 aktiv zu schalten, d.h. beispielsweise mit einem Spannungssignal zu belegen, so dass auftreffendes Licht in ein elektrisches Signal umgewandelt wird. Die Teilflächen 70,72 und 74 des Detektors können insbesondere alle die gleiche Größe, d.h. Fläche, aufweisen oder aber auch unterschiedlich groß ausgestaltet sein.

Zu Aktivierung einer lichtempfindlichen Teilfläche des Detektors kann beispielsweise für jede Fläche ein Anschluss aus dem Diodengehäuse herausgeführt werden, sodass durch entsprechende Kontaktierung bzw. Ansteuerung eines solchen Anschlusses das jeweilige lichtempfindliche Teilelement angesteuert und selektiv verwendet werden kann. Dies sei durch die symbolisch dargestellten, elektrischen Verbindungsleitungen 57 in den Figuren 3 bis 8 angedeutet. Dazu sind entsprechende Schaltmittel vorgesehen, die es ermöglichen, in Abhängigkeit von einem entsprechenden Steuersignal, die jeweils bevorzugte Teilfläche oder Teilflächen des Detektors 54 zu aktivieren. Bei mehreren Flächen könnte alternativ auch ein Multiplexer direkt in den Detektor 54, beispielsweise in eine Photodiode integriert werden.

Für sehr große Objektabstände 48 zwischen dem Zielobjekt 15 und dem Messgerät 10 kommt der Messfleck 58 vollständig auf der lichtempfindlichen Teilfläche 70 zu liegen. In diesem Fall, d. h. für große Messdistanzen würde durch entsprechende Schaltungsmittel, lediglich die lichtempfindliche Fläche 70 aktiv geschaltet, sodass diese als Detektorfläche wirkt und das optische Mess-Signal in ein elektrisches Mess-Signal überführt. Die ebenfalls vorhandenen Teilflächen 72 und 74 des Detektors sind dabei nicht aktiviert, es liegt beispielsweise keine Spannung an diesen lichtempfindlichen Oberflächen an, sodass Licht, welches auf diese Oberflächen auftritt, nicht zu der Erzeugung eines elektrischen Signals beiträgt. Sollte also Fremdlicht, welches von anderen Objekten, die näher am Messgerät liegen als das gegenwärtig zu vermessende Objekt 15 in das Messgerät gelangen, so würde dieses Fremdlicht jedoch aufgrund der nicht aktivierten, d. h. nicht eingeschalteten lichtempfindlichen Flächen 72 und 74 auch nicht detektiert. Dieses Fremdlicht würde somit auch nicht zu einem erhöhten Untergrundrauschen gegenüber dem von dem Messbündel 58 erzeugten Mess-Signal der aktiven Fläche 70 führen.

Die aktive Fläche 70, welche insbesondere für sehr große Messentfernungen aktiviert ist, weist in vorteilhafter Weise eine derartige laterale Ausdehnung in der Detektionsebene auf, dass diese sicherstellt, dass der Messfleck 58 der von einem solchen, weit entfernten Zielobjekt rücklaufenden Mess-Strahlung 16 bzw. 49 vollständig detektiert wird. Als laterale Richtung sei hierbei eine Richtung senkrecht zur Messsignalrichtung verstanden. Daher sollte die Abmessung der lichtempfindlichen Flächen 70 im Wesentlichen gleich bzw. leicht größer als die Abmessungen eines Messflecks 58 für sehr große Objektabstände sein. Wandert nun der Messfleck mit abnehmendem Objektabstand 48 in Richtung des Pfeils 61 von der ursprüngliche Empfangsachse 51 aus, so vergrößert sich, wie in Figur 2 angedeutet, der Durchmesser bzw. die lateralen Ausdehnungen des Messflecks. Die laterale Richtung ist hierbei die Richtung senkrecht zur Richtung 61, in die das Messstrahlenbündel auswandert.

In Richtung 61 einer Strahlverschiebung für kleiner werdende Zielobjektabstände 48 besitzt der Flächendetektor insgesamt eine elongierte Form. Dabei ist die Ausdehnung in Richtung der Auswanderung des Messsignals größer, insbesondere deutlich größer, als in dazu orthogonaler, d.h. lateraler Richtung.

Bei dem Auswandern des rücklaufenden Mess-Strahlbündels kommt es zu einer Situation, bei der das Mess-Strahlbündel beispielsweise Teile beider lichtempfindlichen Flächen 70 bzw. 72 zumindest teilweise überstreicht, wie dies mittels des gestrichelt eingezeichneten Messfleckes 63 in Figur 3 dargestellt sein soll. In einer derartigen Situation wird mit einer entsprechenden Messtechnik detektiert, auf welcher der lichtempfindlichen Flächen 70 oder 72 der größere Anteil des reflektierten Mess-Strahlenbündels (hier Bündel 63) zu liegen kommt, sodass bei einer Entfernungsmessung in dieser Konfiguration lediglich diejenige empfindliche Fläche (hier 70 oder 72) aktiv geschaltet werden kann, auf die der größte Anteil der rücklaufenden Strahlung auftrifft. Durch das Abschalten von nicht- oder nur teilweise genutzten Fotodiodenflächen, kann das Rauschen durch Fremdlicht somit deutlich verringert werden, da nur diejenige Teilfläche des Detektors genutzt wird, auf die das Nutzlicht optimiert auftrifft. Diejenigen Flächen des Detektors, die einen verhältnismäßig hohen Fremdlichtanteil haben, werden entsprechend abgeschaltet. Bei der Ermittlung einer Entfernung zu einem Zielobjekt 15 ist somit insbesondere in dieser Ausführungsform jeweils immer nur eine lichtempfindliche Fläche des Detektors aktiv. In alternativen Ausführungsformen können jedoch auch mehrere Teilflächen aktiviert sein, insbesondere dann, wenn das Messsignal gleichzeitig auf mehrere Teilflächen auftrifft und beispielsweise das Summensignal von zwei Teilflächen weniger verrauscht ist, als das Signal der jeweils einzeln betrachteten Teilflächen. In diesem Fall können erfindungsgemäß auch mehrere Teilflächen des Detektors aktiviert sein.

Zur Bestimmung derjenigen Fläche oder Teilflächen, welche den höchsten Nutzlichtanteil und somit auch das höchsten "Signal zu Rauschverhältnis" aufweist, kann beispielsweise vor der eigentlichen Entfernungsmessung eine kurze Testmessung durchgeführt werden, welche lediglich zur Ermittlung der Signalanteile auf den einzelnen lichtempfindlichen Flächen des Detektors der Empfangseinheit dient. Während dieser Testmessung können dann über die entsprechend vorgesehenen Schaltmittel kurzzeitig alle oder auch eine Mehrzahl der lichtempfindlichen Teilflächen des optischen Detektors aktiviert werden und insbesondere einzeln ausgelesen werden. Auf diese Weise kann festgestellt werden, auf welche lichtempfindliche Teilfläche das stärkste Lichtsignal auffällt, um zu entscheiden, ob lediglich eine einzelne Fläche zu aktivieren ist, oder ob mehrere Flächen, die eine echte Teilmenge aller verfügbaren lichtempfindlichen Flächen darstellen, ein besseres Messsignal, insbesondere ein besseres Signal-zu-Rausch-Verhältnis ergeben.

Bei sehr kleinem Messabstand 48 eines Messobjekt 15 zum Messgerät 10, bei welchem der Messfleck weiter in Richtung des Pfeils 61 in Figur 3 gewandert sein wird, kann so beispielsweise lediglich die lichtempfindliche Fläche 74 aktiviert werden und die vom Mess-Signal nicht mehr oder nur noch teilweise beaufschlagte lichtempfindliche Fläche 70 bzw. die lediglich teilbeaufschlagte lichtempfindliche Fläche 72 können erfindungsgemäß abgeschaltet sein.

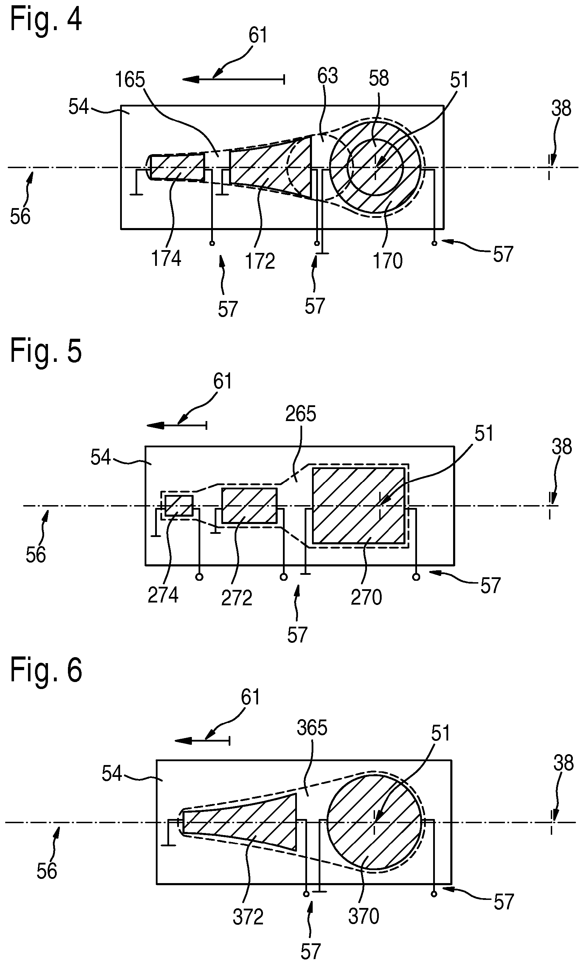

Figur 4 zeigt eine nicht erfindungsgemäße Ausführungsform eines Detektors 54, bei der sich eine Einhüllende 165, die man um die lichtempfindlichen Flächen des Detektors legen bzw. zeichnen kann, in Richtung 61, d.h. in Richtung des Auswanderns des rücklaufenden Mess-strahlenbündels für einen kurzer werdenden Messobjektabstand, verjüngt.

Die Ausdehnung der lichtempfindlichen Flächen 170, 172 bzw. 174 des Detektors in Richtung senkrecht zur optischen Achse 51 der Empfangseinheit 14 ist dabei wiederum zumindest so groß, dass der von einem Zielobjekt 15 im Nahbereich rücklaufende Mess-Strahl zumindest teilweise noch auf die lichtempfindliche Fläche 174 fällt. Dies bedeutet insbesondere, dass für den Fall kurzer Entfernungen 48 zu einem Zielobjekt 15 aufgrund der gemäß des Abstandsquadratgesetzes deutlich erhöhten Lichtintensität, die lichtempfindliche Fläche 174, die bei derartigen Entfernungen zur Verwendung kommt, gegebenenfalls deutlich geringer ausgewählt sein kann. Dies führt dazu, dass sich die elektrische Kapazität des Detektors verringert, sodass auch die zeitliche Ansprechcharakteristik bzw. analog der Frequenzgang des Mess-Systems deutlich erhöht werden kann.

Die Einhüllende 165, welche sich um die lichtempfindliche Flächen des Detektors in der Detektorebene legen bzw. zeichnen lässt, ist in Richtung 61 einer Strahlverschiebung für kleiner werdende Zielobjektabstände 48, verjüngt. Eine derartige Einhüllende 165 ist in Figur 4 ebenfalls eingezeichnet. Die Einhüllende folgt dabei im Wesentlichen der Begrenzung der lichtempfindlichen Teilflächen, wobei der Verlauf der Einhüllenden in Richtung des Pfeils 61, d.h. in Richtung einer Strahlverschiebung für kleiner werdende Zielobjektabstände zwischen zwei Teilflächen interpolierend ist.

Sowohl die Formen der lichtempfindlichen Flächen als auch deren Anzahl innerhalb eines Detektors können je nach Ausführungsform variieren. So zeigt Figur 5 einen Detektor mit einer Mehrzahl von als Rechtecken ausgebildeten lichtempfindlichen Flächen 270,272,274 unterschiedlicher Größe, deren Einhüllende 265 sich wiederum in Richtung 61 einer Strahlverschiebung für kleiner werdende Zielobjektabstände 48 verjüngt. Die lichtempfindlichen Flächen 270,272,274, lassen sich erfindungsgemäß bei einer Entfernungsmessung wiederum jeweils einzeln aktivieren, d.h. zu- oder abschalten.

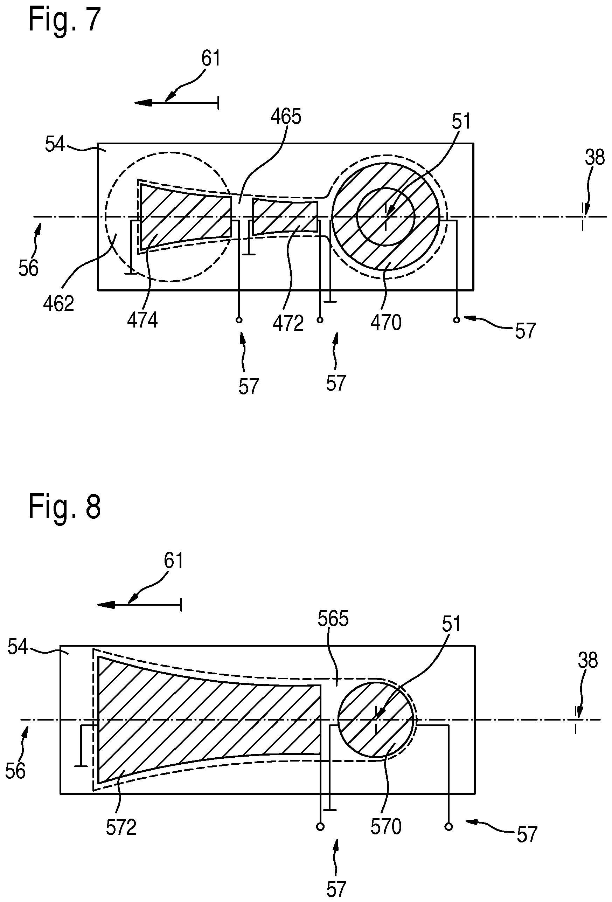

Figur 6 zeigt eine weitere Ausführungsform mit lediglich zwei getrennten, lichtempfindlichen Flächen 370 bzw. 372, die jedoch ebenfalls gemäß dem zuvor beschriebenen Prinzip einzeln aktivierbar sind. Erfindungsgemäß weitet sich die Einhüllende, die sich um die lichtempfindlichen Flächen des Detektors legen lässt, in Richtung für kürzer werdende Objektabstände auf. Eine solche Ausführungsform mit in Richtung 61 sich erweiternder Einhüllender, wie sie beispielhaft in Figur 7 und Figur 8 dargestellt ist, hat den Vorteil, das sie der reduzierten Leistungsdichte des rücklaufenden Messsignals für kurze Messobjektabstände Rechnung trägt. Aufgrund eines kurzen Messobjektabstandes wird das rücklaufende Messstrahlenbündel nicht mehr optimal in der Detektionsebene fokussiert, da die Kollimationsoptik 52 eines solchen Messgerätes in der Regel auf sehr große Messobjektabstände hin optimiert ist. Da der Messfleck sich in der Detektionsebene für kürzer werdende Messobjektabstände schnell vergrößert - vergleiche hierzu die Darstellung in Figur 2 - ergibt sich auf der Detektoroberfläche eine reduzierte Leistungsflächendichte bzw. Intensität des Messsignal. Beispielhaft ist in Figur 7 ein Messfleck 462 für kurze Messobjektabstände angedeutet. Dieses Verhalten kann insbesondere bei einer sich verjüngenden Einhüllenden der Teildetektorflächen (vgl. Figur 4 bis 6) dazu führen, dass nur noch ein kleiner Teil des Messfleckes auf die Detektoroberfläche fallen würde und somit das detektierte Messsignal relativ gering wäre. Diesem Effekt der reduzierten Leistungsdichte des Messsignals auf der Detektoroberfläche kann dadurch begegnet werden, dass sich die Detektorfläche in Richtung 61 für kürzer werdende Objektabstände aufweitet oder auch nach einer vorherigen Einschnürung wieder aufweitet, wie dies im Ausführungsbeispiel eines erfindungsgemäßen Detektors in der Figur 7 dargestellt ist. Die Einhüllende 465 der lichtempfindlichen Detektorflächen 470 und 472 und 474 weitet sich in Richtung 61 für kürzer werdende Objektabstände wieder auf, nachdem sie sich zuerst, im Bereich des Übergangs vom Teilelement 470 auf das Teilelement 472 eingeschnürt hat. Auch eine derartige Form soll im Rahmen der Offenbarung der Erfindung dem Kriterium entsprechen, dass die lichtempfindlichen Flächen des Detektors derart ausgeformt und angeordnet sind, dass sich eine Einhüllende dieser Flächen in Richtung einer Strahlverschiebung für kleiner werdende Zielobjektabstände aufweitet.

Bei den konkreten Ausgestaltungen einer erfindungsgemäßen Vorrichtung kann sowohl die Anzahl und/oder die Form der einzelnen lichtempfindlichen Flächen, die ein entsprechender Detektor aufweisen kann, selbstverständlich von der in Figur 7 gezeigten, beispielhaften Ausführungsform abweichen. So könnte beispielsweise das Teilelement 472 auch als ein Rechteck ausgebildet sein, die anderen Teilelemente 470 bzw. 474 der lichtempfindlichen Oberfläche jedoch ihre in Figur 7 dargestellte Form aufweisen.

Es gilt - je nach konstruktiver Ausgestaltung der Messvorrichtung - den Effekt des Abstandsquadratgesetztes einerseits, sowie den Effekt der mehr oder weniger schlechten Fokussierung anderseits, die sich beide bei kürzer werdenden Messobjektabständen einstellen, jedoch für die Stärke des Messsignals eine gegenläufige Auswirkung haben, gegeneinander abzuwägen und die optimierte Form für die lichtempfindlichen Flächen, insbesondere für die Einhüllende der lichtempfindlichen Flächen zu finden.

Figur 8 zeigt eine ebenfalls mögliche Ausgestaltung der erfindungsgemäßen Idee mit lediglich zwei lichtempfindlichen Teildetektorflächen 570 und 572, deren Einhüllende 565 sich jedoch kontinuierlich in Richtung 61 für kürzer werdende Objektabstände aufweitet.

Unabhängig von der Form der Einhüllenden der lichtempfindlichen Flächen sind dieses jedoch jeweils einzeln aktivierbar, so dass der erfindungsgemäße Detektor mit lediglich einer oder auch mehreren Teilflächen betrieben werden kann.

Die erfindungsgemäße Vorrichtung ist nicht auf die in der Beschreibung dargestellten Ausführungsformen beschränkt.

Insbesondere ist die erfindungsgemäße Vorrichtung nicht beschränkt auf die dargestellten Formen bzw. Anzahlen der einzelnen lichtempfindlichen Teilflächen des Detektors.

## Patentansprüche

1. Vorrichtung zur optischen Entfernungsmessung, insbesondere eine handgehaltene Vorrichtung, mit einer Sendeeinheit (12) mit einer Lichtquelle (17, 18) zur Aussendung optischer Messstrahlung (13, 20, 22) auf ein Zielobjekt (15) hin, und mit einer zu der optischen Achse (38) der Sendeeinheit (12) beabstandeten Empfangseinheit (14) mit zumindest einem optischen Detektor (54) zum Empfang von vom Zielobjekt (15) rücklaufender optischer Strahlung (16, 49, 50), wobei der Detektor (54) der Empfangseinheit (14) eine Mehrzahl von voneinander getrennten, lichtempfindlichen Flächen (70, 72, 74; 170, 172, 174; 270, 272, 274; 370, 372; 470, 472; 570, 572) aufweist, die getrennt voneinander aktivierbar sind, **dadurch gekennzeichnet, dass** die lichtempfindlichen Flächen (470,472,474;570,572) des Detektors (54) derart ausgeformt und/oder angeordnet sind, dass sich eine Einhüllende (465,565) dieser Flächen (470,472,474;570,572) in Richtung (61) einer Strahlverschiebung für kleiner werdende Zielobjektabstände (48) aufweitet.

2. Vorrichtung nach Anspruch 1, **dadurch gekennzeichnet, dass** Mittel (55) vorhanden sind, die es ermöglichen, einzelne lichtempfindliche Flächen (70,72,74; 170,172,174; 270,272,274;370,372;470,472;570,572) des Detektors (54) an- bzw. abzuschalten.

3. Vorrichtung nach Anspruch 1 oder 2, **dadurch gekennzeichnet, dass** die lichtempfindlichen Flächen (70,72,74;170,172,174;270,272,274;370,372;470,472; 570,572) des Detektors (54) derart ausgeformt und/oder angeordnet sind, dass eine Einhüllende (165,265,365,465,565) dieser Flächen (70,72,74;170,172,174; 270,272,274;370,372;470,472;570,572) in Richtung (61) einer Strahlverschiebung für kleiner werdende Zielobjektabstände (48) eine größere Ausdehnung besitzt, als in dazu orthogonaler Richtung.

4. Vorrichtung nach einem der vorhergehenden Ansprüche, **dadurch gekennzeichnet, dass** die Einhüllende (165,265,365,465,565) der lichtempfindlichen Flächen (70,72,74;170,172,174;270,272,274;370,372;470,472; 570,572) des Detektors (54) eine Symmetrieachse aufweist, die in der gemeinsamen Ebene (56) der optischen Achsen von Sendeeinheit (38) und Empfangseinheit (51) liegt.

5. Vorrichtung nach einem der vorhergehenden Ansprüche, **dadurch gekennzeichnet, dass** die Ausdehnung der lichtempfindlichen Flächen (70,72,74;170,172,174; 270,272,274;370,372;470,472;570,572) des Detektors (54) zumindest so groß ist, dass der Messfleck (58) der rücklaufenden Strahlung (16,49) von einem Zielobjekt (15) mit großem Objektabstand vollständig detektiert wird.

6. Vorrichtung nach einem der vorhergehenden Ansprüche, **dadurch gekennzeichnet, dass** die Ausdehnung der lichtempfindlichen Flächen (70,72,74;170,172,174; 270,272,274;370,372;470,472;570,572) des Detektors (54) in Richtung senkrecht zur optischen Achse (51) der Empfangseinheit (14) zumindest so groß ist, dass der von einem Zielobjekt (15) im Nahbereich rücklaufende Messstrahl (50) zumindest teilweise noch auf die lichtempfindliche Fläche (70,72,74;170,172,174;270,272,274; 370,372;470,472,570,572) fällt.

7. Vorrichtung nach einem der vorhergehenden Ansprüche, **dadurch gekennzeichnet, dass** die Lichtquelle (17,18) ein Laser, insbesondere eine Laserdiode (18) ist.

8. Vorrichtung nach Anspruch 7, **dadurch gekennzeichnet, dass** die Lichtquelle (17,18) Strahlung im für das menschliche Auge sichtbaren Wellenlängenbereich des Spektrums elektromagnetischer Wellen emittiert.

9. Verfahren zum Betrieb einer Vorrichtung nach zumindest einem der Ansprüche 1 bis 8, **dadurch gekennzeichnet, dass** ein Detektor (54) einer in der Vorrichtung vorgesehenen Empfangseinheit (14) eine Mehrzahl (m) von voneinander getrennten lichtempfindlichen Flächen (70,72,74;170,172,174;270,272,274;370,372; 470,472;570,572) aufweist, von denen bei einer Entfernungsmessung nur jeweils eine Teilmenge (n, mit n<m) der vorhandenen lichtempfindlichen Flächen (70,72,74;170,172,174; 270,272,274;370,372;470,472,570,572) aktiviert wird.

10. Verfahren zum Betrieb einer Vorrichtung zur optischen Entfernungsmessung nach Anspruch 9, **dadurch gekennzeichnet, dass** jeweils nur eine lichtempfindliche Fläche (n=1) (70,72,74;170,172,174;270,272,274;370,372;470,472;570,572) des Detektors (54) bei einer Entfernungsmessung aktiv ist.

11. Verfahren nach Anspruch 10, **dadurch gekennzeichnet, dass** bei einer Entfernungsmessung jeweils nur diejenige lichtempfindliche Fläche (70,72,74; 170,172,174;270,272,274;370,372;470,472;570,572) des Detektors (54) der Vorrichtung aktiv ist, auf die der größte Anteil der von einem Zielobjekt (15) rücklaufenden optischen Strahlung (16,49,50) auftrifft.

## Claims

1. Device for optically measuring distance, in particular a handheld device, having a transmitting unit (12) with a light source (17, 18) for emitting optical measurement radiation (13, 20, 22) toward a target object (15), and having a receiving unit (14), which is located at a distance from the optical axis (38) of the transmitting unit (12) and has at least one optical detector (54) for receiving optical radiation (16, 49, 50) returning from the target object (15), wherein the detector (54) of the receiving unit (14) has a plurality of mutually separate light-sensitive surfaces (70, 72, 74; 170, 172, 174; 270, 272, 274; 370, 372; 470, 472; 570, 572) which are able to be activated separately from one another, **characterized in that** the light-sensitive surfaces (470, 472, 474; 570, 572) of the detector (54) are formed and/or arranged such that an envelope (465, 565) of these surfaces (470, 472, 474; 570, 572) expands in the direction (61) of a beam displacement for progressively diminishing target object distances (48).

2. Device according to Claim 1, **characterized in that** means (55) are provided that permit individual light-sensitive surfaces (70, 72, 74; 170, 172, 174; 270, 272, 274; 370, 372; 470, 472; 570, 572) of the detector (54) to be switched on or off.

3. Device according to Claim 1 or 2, **characterized in that** the light-sensitive surfaces (70, 72, 74; 170, 172, 174; 270, 272, 274; 370, 372; 470, 472; 570, 572) of the detector (54) are formed and/or arranged such that an envelope (165, 265, 365, 465, 565) of these surfaces (70, 72, 74; 170, 172, 174; 270, 272, 274; 370, 372; 470, 472; 570, 572) has a greater extent in the direction (61) of a beam displacement for progressively diminishing target object distances (48) than in the direction that is orthogonal with respect thereto.

4. Device according to one of the preceding claims, **characterized in that** the envelope (165, 265, 365, 465, 565) of the light-sensitive surfaces (70, 72, 74; 170, 172, 174; 270, 272, 274; 370, 372; 470, 472; 570, 572) of the detector (54) has an axis of symmetry that is located in the common plane (56) of the optical axes of transmitting unit (38) and receiving unit (51).

5. Device according to one of the preceding claims, **characterized in that** the extent of the light-sensitive surfaces (70, 72, 74; 170, 172, 174; 270, 272, 274; 370, 372; 470, 472; 570, 572) of the detector (54) is at least large enough for the measurement spot (58) of the returning radiation (16, 49) from a target object (15) with a large object distance to be completely detected.

6. Device according to one of the preceding claims, **characterized in that** the extent of the light-sensitive surfaces (70, 72, 74; 170, 172, 174; 270, 272, 274; 370, 372; 470, 472; 570, 572) of the detector (54) in a direction perpendicular to the optical axis (51) of the receiving unit (14) is at least large enough for the measurement beam (50) returning from a target object (15) in the near region to at least partially still be incident on the light-sensitive surface (70, 72, 74; 170, 172, 174; 270, 272, 274; 370, 372; 470, 472; 570, 572).

7. Device according to one of the preceding claims, **characterized in that** the light source (17, 18) is a laser, in particular a laser diode (18).

8. Device according to Claim 7, **characterized in that** the light source (17, 18) emits radiation in the wavelength range of the spectrum of electromagnetic waves that is visible to the human eye.

9. Method for operating a device according to at least one of Claims 1 to 8, **characterized in that** a detector (54) of a receiving unit (14) that is provided in the device has a multiplicity (m) of mutually separate light-sensitive surfaces (70, 72, 74; 170, 172, 174; 270, 272, 274; 370, 372; 470, 472; 570, 572), from which only in each case a subset (n, where n<m) of the provided light-sensitive surfaces (70, 72, 74; 170, 172, 174; 270, 272, 274; 370, 372; 470, 472; 570, 572) is activated during a distance measurement.

10. Method for operating a device for optically measuring distance according to Claim 9, **characterized in that** in each case only one light-sensitive surface (n=1) (70, 72, 74; 170, 172, 174; 270, 272, 274; 370, 372; 470, 472; 570, 572) of the detector (54) is active during a distance measurement.

11. Method according to Claim 10, **characterized in that** in each case only the light-sensitive surface (70, 72, 74; 170, 172, 174; 270, 272, 274; 370, 372; 470, 472; 570, 572) of the detector (54) of the device onto which the largest proportion of the optical radiation (16, 49, 50) returning from a target object (15) is incident is active during a distance measurement.

## Revendications

1. Dispositif de mesure de distance optique, notamment un dispositif tenu en main, comprenant une unité d'émission (12) pourvue d'une source de lumière (17, 18) destinée à émettre un rayon de mesure optique (13, 20, 22) en direction d'un objet cible (15), et comprenant une unité de réception (14) espacée de l'axe optique (38) de l'unité d'émission (12), pourvue d'au moins un détecteur optique (54) destiné à recevoir le rayonnement optique (16, 49, 50) retourné par l'objet cible (15), le détecteur (54) de l'unité de réception (14) possédant une pluralité de surfaces photosensibles séparées les unes des autres (70, 72, 74 ; 170, 172, 174 ; 270, 272, 274 ; 370, 372 ; 470, 472 ; 570, 572) qui peuvent être activées séparément les unes des autres, **caractérisé en ce que** les surfaces photosensibles (470, 472, 474 ; 570, 572) du détecteur (54) sont façonnées et/ou disposées de telle sorte qu'une enveloppe (465, 565) de ces surfaces (470, 472, 474 ; 570, 572) dans la direction (61) possède un décalage de rayon pour des écarts d'objet cible (48) qui deviennent plus petits.

2. Dispositif selon la revendication 1, **caractérisé en ce qu'**il existe des moyens (55) qui permettent d'activer ou de désactiver les surfaces photosensibles (70, 72, 74 ; 170, 172, 174 ; 270, 272, 274 ; 370, 372 ; 470, 472 ; 570, 572) individuelles du détecteur (54).

3. Dispositif selon la revendication 1 ou 2, **caractérisé en ce que** les surfaces photosensibles (70, 72, 74 ; 170, 172, 174 ; 270, 272, 274 ; 370, 372 ; 470, 472 ; 570, 572) du détecteur (54) sont façonnées et/ou disposées de telle sorte qu'une enveloppe (165, 265, 365, 465, 565) de ces surfaces (70, 72, 74 ; 170, 172, 174 ; 270, 272, 274 ; 370, 372 ; 470, 472 ; 570, 572) possède, dans la direction (61) d'un décalage de rayon pour des écarts d'objet cible (48) qui deviennent plus petits, une étendue plus grande que dans la direction orthogonale à celle-ci.

4. Dispositif selon l'une des revendications précédentes, **caractérisé en ce que** l'enveloppe (165, 265, 365, 465, 565) des surfaces photosensibles (70, 72, 74 ; 170, 172, 174 ; 270, 272, 274 ; 370, 372 ; 470, 472 ; 570, 572) du détecteur (54) possède un axe de symétrie qui se trouve dans le plan commun (56) des axes optiques de l'unité d'émission (38) et de l'unité de réception (51).

5. Dispositif selon l'une des revendications précédentes, **caractérisé en ce que** l'étendue des surfaces photosensibles (70, 72, 74 ; 170, 172, 174 ; 270, 272, 274 ; 370, 372 ; 470, 472 ; 570, 572) du détecteur (54) est au moins suffisamment grande pour que le spot de mesure (58) du rayonnement renvoyé (16, 49) par un objet cible (15) soit entièrement détecté avec un écart important de l'objet.

6. Dispositif selon l'une des revendications précédentes, **caractérisé en ce que** l'étendue des surfaces photosensibles (70, 72, 74 ; 170, 172, 174 ; 270, 272, 274 ; 370, 372 ; 470, 472 ; 570, 572) du détecteur (54) dans la direction perpendiculaire à l'axe optique (51) de l'unité de réception (14) est au moins suffisamment grande pour que le rayon de mesure (50) renvoyé dans la zone de proximité par un objet cible (15) soit au moins partiellement encore incident sur la surface photosensible (70, 72, 74 ; 170, 172, 174 ; 270, 272, 274 ; 370, 372 ; 470, 472, 570, 572).

7. Dispositif selon l'une des revendications précédentes, **caractérisé en ce que** la source de lumière (17, 18) est un laser, notamment une diode laser (18).

8. Dispositif selon la revendication 7, **caractérisé en ce que** la source de lumière (17, 18) émet un rayonnement dans la plage de longueurs d'onde du spectre des ondes électromagnétiques qui est visible pour l'oeil humain.

9. Procédé pour faire fonctionner un dispositif selon au moins l'une des revendications 1 à 8, **caractérisé en ce qu'**un détecteur (54) d'une unité de réception (14) présente dans le dispositif possède une pluralité (m) de surfaces photosensibles (70, 72, 74 ; 170, 172, 174 ; 270, 272, 274 ; 370, 372 ; 470, 472 ; 570, 572) séparées les unes des autres, parmi lesquelles seule une quantité partielle (n, avec n < m) des surfaces photosensibles (70, 72, 74 ; 170, 172, 174 ; 270, 272, 274 ; 370, 372 ; 470, 472, 570, 572) présentes est à chaque fois activée lors d'une mesure de distance.

10. Procédé pour faire fonctionner un dispositif de mesure de distance optique selon la revendication 9, **caractérisé en ce qu'**une seule surface photosensible (n = 1) (70, 72, 74 ; 170, 172, 174 ; 270, 272, 274 ; 370, 372 ; 470, 472 ; 570, 572) du détecteur (54) est à chaque fois active lors d'une mesure de distance.

11. Procédé selon la revendication 10, **caractérisé en ce que** lors d'une mesure de distance, seule la surface photosensible (70, 72, 74 ; 170, 172, 174 ; 270, 272, 274 ; 370, 372 ; 470, 472 ; 570, 572) du détecteur (54) du dispositif sur laquelle vient frapper la plus grande partie du rayonnement optique (16, 49, 50) retourné par un objet cible (15) est à chaque fois active.
